# EUROPÄISCHE PATENTSCHRIFT

(11) **EP 0 388 502 B1**
(45) Veröffentlichungstag und Bekanntmachung des Hinweises auf die Patenterteilung: **01.06.1994**
(21) Anmeldenummer: 89105282.1
(22) Anmeldetag: 23.03.1989
(51) Int. Cl.: G01N 21/43, G01N 25/08

(54) **Optische Messanordnung zum Nachweis von Kavitationsblasen in Flüssigkeiten**
Optical measuring device for detecting cavitation bubbles in fluids
Dispositif de mesure optique pour la détection de bulles de cavitation dans des fluides

(43) Veröffentlichungstag der Anmeldung: 26.09.1990
(73) Patentinhaber: SIEMENS AKTIENGESELLSCHAFT, 80333 München (DE)
(72) Erfinder: Granz, Bernd, Dr., D-8507 Oberasbach (DE); Holzapfel, Ralf, D-8521 Bräuningshof (DE)

(56) Entgegenhaltungen:
- GB-A- 1 597 340
- US-A- 4 516 432
- APPLIED OPTICS, Band 26, Nr. 21, 1. November 1987, Seiten 4660-4664, Optical Society of America; D. MORRIS et al.: "Optical fiber probe to measure local void fraction profiles"
- PATENT ABSTRACTS OF JAPAN, Band 12, Nr. 456 (P-793)[3303], 30. November 1988; & JP-A-63 179 240

## Beschreibung

Die Erfindung bezieht sich auf eine optische Meßanordnung zum Nachweis von Kavitationsblasen in Flüssigkeiten.

Bei einem Durchgang von Stoßwellen mit genügend starkem Unterdruckanteil durch eine Flüssigkeit oder bei extrem schnellen Strömungen von Flüssigkeiten tritt in der Flüssigkeit selbst oder auch an Grenzflächen Kavitation auf. Die dabei entstehenden Kavitationsblasen kollabieren nach kurzer Zeit wieder. Beim Kollaps dieser Kavitationsblasen können beispielsweise an den Oberflächen, an denen sie sich abgelagert haben Zerstörungen auftreten. Um unerwünschte Zerstörungen zu vermeiden ist es erforderlich, die Entstehung und das zeitliche Verhalten dieser Kavitationsblasen nachzuweisen und zu überwachen. Ultraschall-Stoßwellen mit steilen Pulsflanken treten beispielsweise in Lithotriptoren auf und werden dort verwendet, um im Körper eines Patienten befindliche Konkremente, beispielsweise Nierensteine, zu zertrümmern. Dabei muß das Auftreten von Kavitationseffekten im Schallfeld, beispielsweise auch innerhalb des Körpers, überwacht werden.

Eine Möglichkeit zum Nachweis von Kavitationsblasen besteht in der direkten optischen Beobachtung mit Hilfe einer Hochgeschwindigkeitskamera. Eine solche Methode ist jedoch aufwendig, nur für optisch transparente Flüssigkeiten möglich und für einen praktischen Einsatz im Dauerbetrieb nicht geeignet.

Aus "Y.Tomita et al., Collapse of multiple gas bubbles by a shock wave and induced impulsive pressure, J. Appl.Phys. 56 (1), 1984, Seiten 125 bis 131" ist eine Anordnung zum Nachweis von Kavitationsblasen bekannt, bei der der von einer kollabierenden Kavitationsblase ausgesendete Ultraschallimpuls gemessen wird. Diese Methode ist aber für Lithotriptoren nicht geeignet, da der ausgesendete Ultraschallimpuls nur eine geringe Amplitude hat und nur schwer von der abklingenden reflektierten Stoßwelle separiert werden kann.

Der Erfindung liegt somit die Aufgabe zugrunde, eine Meßanordnung zum Nachweis von durch eine Ultraschall-Stoßwelle erzeugten Kavitationsblasen in Flüssigkeiten anzugeben, die technisch unaufwendig realisiert werden kann und einen sicheren Nachweis von Kavitationsblasen auch in Anwesenheit eines störenden Ultraschall-Hintergrundes ermöglicht.

Die genannte Aufgabe wird erfindungsgemäß gelöst mit den Merkmalen des Hauptanspruches. Die in der Nähe des freien Endes eines Lichtwellenleiters entstehenden Kavitationsblasen diffundieren an die Oberfläche dieses Lichtwellenleiters und lagern sich an dessem freien Ende an. Dadurch ändert sich der Brechungsindex des den Lichtwellenleiter umgebenden Mediums und der Anteil des am freien Ende des Lichtwellenleiters in den Lichtwellenleiter reflektierten Lichtes ändert sich ebenfalls.

Eine Meßanordnung mit den Merkmalen des Hauptanspruches kann leicht miniaturisiert werden und ermöglicht auch Messungen an schwer zugänglichen Stellen, beispielsweise endoskopische Messungen im Körper eines Patienten.

Aus "J.Staudenraus, W.Eisenmenger, Optisches Sondenhydrophon, Fortschritte der Akustik, DAGA 1988, DPG GmbH 1988, 467" ist zwar eine Meßanordnung bekannt, bei der der Anteil des an einem freien Lichtwellenleiterende reflektierten optischen Signals verwendet wird, um den zeitlichen Verlauf des Druckes von Ultraschall-Stoßwellen in einer Flüssigkeit zu messen. Bei dieser bekannten Meßanordnung wird ausgenutzt, daß die hohe Druckamplitude in unmittelbarer Nähe der Lichtwellenleiterspitze eine Dichteänderung und somit eine Änderung des Brechungsindex der Flüssigkeit erzeugt, die den Anteil des in den Lichtwellenleiter zurückreflektierten Lichtes moduliert. Die zur Messung verwendeten Lichtwellenleiter haben dabei einen Durchmesser, der 0,1 mm nicht überschreitet. In einer aus "J.Staudenraus, W.Eisenmenger, Optisches Sondenhydrophon, Seminarband, AMA Seminar: Faser- und integriert optische Sensoren, ACS Organisations GmbH, Wunstorf, 1988, Seiten 67 bis 73" bekannten Meßanordnung wird ein Kerndurchmesser für die Lichtleitfaser von 0,2 mm angegeben. Kavitationsblasen wurden mit beiden Meßanordnungen zwar beobachtet, machen sich jedoch nur als Intensitätsfluktuationen des zurücklaufenden Lichtes bemerkbar. Aus "Applied Optics, Vol. 26, No. 21, 1. Nov. 1987, Seiten 4660 bis 4664" ist eine optische Meßanordnung zum Nachweis von Blasen in einer Flüssigkeit mit einem zylindrischen Lichtwellenleiter mit einem freien Ende bekannt. Das andere Ende des Lichtwellenleiters ist mit einer Lichtquelle und einem Lichtempfänger optisch gekoppelt, und dem Lichtempfänger sind Mittel zum Detektieren eines durch Blasen am freien Ende des Lichtwellenleiters verursachten Meßsignals zugeordnet.

Die Erfindung beruht nun auf der Erkenntnis, daß Kavitationsblasen, die sich in der freien Flüssigkeit bilden, erst dann deutlich nachgewiesen werden können, wenn sie sich an das freie Ende eines Lichtwellenleiters anlagern. Erst in diesem Fall erhält man ein Signal, das sowohl zeitlich als auch hinsichtlich seiner Amplitude mit der Stoßwelle korreliert ist und eindeutig als Kavitationssignal interpretiert werden kann. Dieses Kavitationssignal kann mit geeigneten, dem Lichtempfänger nachgeschalteten Mitteln detektiert und sowohl zur Anzeige eines auftretenden Kavitationseffektes als auch zur Analyse der Lebensdauer der Kavitationsblasen herangezogen werden.

Eine Anlagerung an das freie Ende des Lichtwellenleiters wird erleichtert, wenn das freie Ende eine ebene Querschnittsfläche aufweist, die größer als 0,2 mm² ist. Das freie Ende des Lichtwellenleiters wird vorzugsweise durch eine ebene Stirnfläche gebildet, die wenigstens annähernd senkrecht zur Längsachse des Lichtwellenleiters angeordnet ist.

Der Lichtwellenleiter besteht vorzugsweise aus einem Polymer, insbesondere aus Polymethylmethacrylat PMMA. Dabei sind Lichtwellenleiter aus PMMA unempfindlicher als Lichtwellenleiter aus Glas gegen die zerstörende Wirkung von Stoßwellen.

Als Lichtwellenleiter sind insbesondere zylindrische Fasern geeignet, deren Durchmesser größer als 0,5 mm ist.

Die von den Kavitationsblasen verursachte Änderung der Reflektivität der Grenzfläche zwischen dem freien Ende des Lichtwellenleiters und der Flüssigkeit unterscheidet sich vom Stoßwellensignal sowohl hinsichtlich seiner Amplitude als auch hinsichlich seines Vorzeichens. Das Auftreten von Kavitationsblasen läßt sich somit in einer dem Lichtempfänger nachgeordneten Auswerteschaltung leicht erkennen.

Zur weiteren Erläuterung der Erfindung wird auf die Zeichnung verwiesen, in deren
- Figur 1: eine optische Meßanordnung gemäß der Erfindung schematisch veranschaulicht ist. In
- Figur 2: ist der zeitliche Verlauf des an einem Lichtempfänger gemessenen Ausgangssignals bei Auftreten von Kavitationsblasen in einem Diagramm aufgetragen.

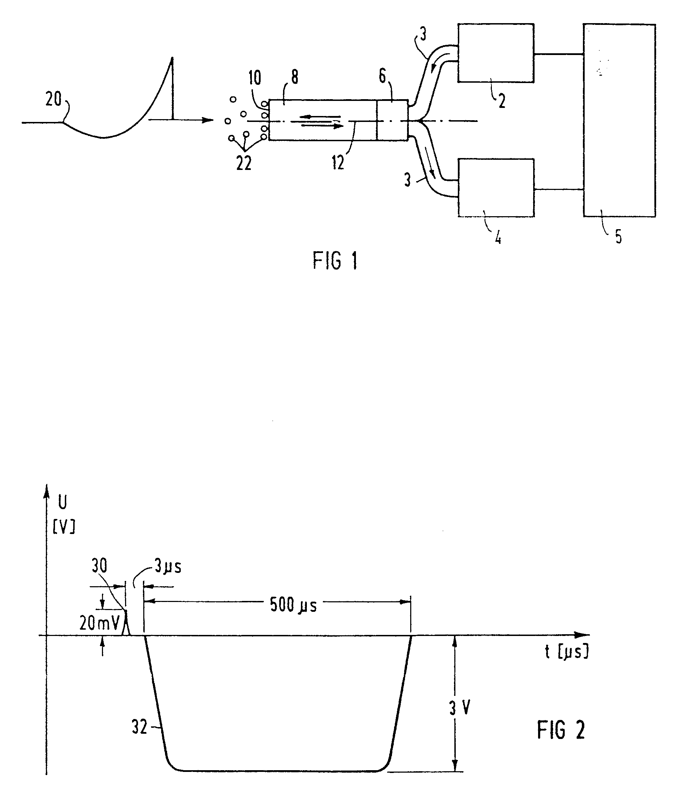

Gemäß Figur 1 ist eine Lichtquelle 2, beispielsweise eine Laserdiode, und ein Lichtempfänger 4, beispielsweise eine Fotodiode über Lichtleitfasern 3 und einem y-Koppler 6 mit einem Lichtwellenleiter 8 optisch gekoppelt. Der Lichtwellenleiter 8 hat an seinem vom y-Koppler 6 abgewandten freien Ende 10 eine ebene Stirnfläche, die vorzugsweise senkrecht zur Längsachse 12 des Lichtwellenleiters 8 angeordnet ist. Durch eine ebene Gestalt des freien Endes 10 des Lichtwellenleiters 8 wird das Anlagern von Kavitationsblasen 22, die durch eine Stoßwelle 20, deren zeitlicher Druckverlauf in der Figur schematisch veranschaulicht ist, erleichtert. Der Lichtwellenleiter 8 besteht in einer bevorzugten Ausführungsform aus einem Polymer, insbesondere Polymethylmethacrylat, PMMA. Die Querschnittsfläche des freien Endes 10 ist vorzugsweise größer als 0,2 mm², insbesondere größer als 0,5 mm². Als Lichtwellenleiter 8 ist insbesondere eine zylindrische Faser mit einem Durchmesser größer als 0,5 mm geeignet.

Beim Durchgang einer Stoßwelle 20 durch die Flüssigkeit werden Kavitationsblasen 22 erzeugt, die sich an Inhomogenitäten in der Flüssigkeit und auch am freien Ende 10 des Lichtwellenleiters 8 anlagern. Dadurch wird die Reflektivität der Grenzfläche zwischen Lichtwellenleiter 8 und der Flüssigkeit deutlich erhöht und der Lichtempfänger 4 empfängt so lange eine hohe Intensität, bis die Kavitationsblasen 22 am freien Ende 10 wieder kollabieren. Durch die Messung der Reflektivität dieser Grenzfläche kann man sowohl die Entstehung von Kavitationsblasen 22 nachweisen, als auch ihre Lebensdauer bestimmen. Dabei tragen die freien, sich in der Flüssigkeit befindlichen Kavitationsblasen 22 praktisch nicht zum am Lichtempfänger 4 empfangenen Meßsignal bei, da der Anteil des durch diffuse Reflexion an den freien Kavitationsblasen 22 erneut in den Lichtwellenleiter 8 zurückreflektierten Lichtes praktisch vernachlässigbar ist.

Die Lichtquelle 2 und der Lichtempfänger 4 ist mit einer Steuer- und Auswerteeinheit 5 verbunden, in der das vom Lichtempfänger 4 gemessene Signal daraufhin analysiert wird, ob es als Signalanteil ein Kavitationssignal enthält, das die Existenz von Kavitationsblasen 22 anzeigt. Das mit dem Auftreten von Kavitationsblasen 22 einhergehende Kavitationssignal kann aufgrund seiner charakteristischen Eigenschaften mit geeigneten Mitteln einfach detektiert werden. Dazu können beispielsweise in der Steuer- und Auswerteeinheit 5 Mittel vorgesehen sein, mit denen das am Lichtempfänger 4 gemessene Stoßwellensignal vom Kavitationssignal unterschieden werden kann. Dies kann beispielsweise durch eine Komparatorschaltung erfolgen, in der die Amplitude der am Lichtempfänger 4 gemessenen Signals mit einem vorgegebenen Schwellwert verglichen wird. Dabei kann zweckmäßigerweise das einem Kavitationssignal zeitlich vorgelagerte Stoßwellensignal als zeitliche und amplitudenmäßige Referenz verwendet werden, wobei als Kavitationssignale beispielsweise nur Meßsignale in Betracht kommen können, die innerhalb eines vorgegebenen Zeitfensters nach Messung des Stoßwellensignals auftreten.

Figur 2 zeigt einen typischen zeitlichen Verlauf des am Lichtempfänger gemessenen elektrischen Signals. Diese Messung wurde mit einem Lichtwellenleiter aus PMMA durchgeführt, der einen Durchmesser von 1 mm hatte. Als Lichtsender wurde eine Laserdiode mit einer Leistung von 5 mW verwendet. Nach Auftreten eines Stoßwellensignals 30, dessen Amplitude in der verwendeten Meßanordnung etwa 20 mV beträgt, wird ein Kavitationssignal 32 mit umgekehrten Vorzeichen beobachtet, dessen Amplitude etwa das 100-fache der Amplitude des Stoßwellensignals 30 beträgt und das etwa 500 µsec andauert bis die Kavitationsblasen zerfallen. Der Vorzeichenunterschied zwischen dem Stoßwellensignal 30 und dem Kavitationssignal 32 kommt daher, daß das Stoßwellensignal 30 durch eine Erhöhung des Brechungsindex der Flüssigkeit verursacht ist, während das Kavitationssignal 32 auf eine deutliche Verringerung des Brechungsindex in der Umgebung des freien Endes des Lichtwellenleiters zurückzuführen ist. Das Kavitationssignal 32 kann vom Stoßwellensignal 30 sowohl hinsichtlich seines zeitlichen Verlaufes als auch hinsichtlich seines Vorzeichens und seiner Amplitude deutlich unterschieden werden.

## Patentansprüche

1. Optische Meßanordnung zum Nachweis von in einer Flüssigkeit von einer Ultraschall-Stoßwelle (20) erzeugten Kavitationsblasen (22) mit folgenden Merkmalen:
a) es ist ein zylindrischer Lichtwellenleiter (8) mit einem Durchmesser von mindestens 0,5 mm vorgesehen, der ein freies Ende (10) und ein anderes Ende aufweist;
b) das andere Ende des Lichtwellenleiters (8) ist mit einer Lichtquelle (2) und einem Lichtempfänger (4) optisch gekoppelt;
c) dem Lichtempfänger (4) sind Mittel (5) zum Detektieren eines von der Ultraschall-Stoßwelle (20) verursachten Stoßwellensignals (30) und eines durch Anlagerung der Kavitationsblasen (22) am freien Ende (10) verursachten Kavitationssignals (32) sowie zum Unterscheiden des Kavitationssignals (32) von dem Stoßwellensignal (30) zugeordnet.

2. Optische Meßanordnung nach Anspruch 1, **dadurch gekennzeichnet,** daß das freie Ende (10) des Lichtwellenleiters (8) eine ebene Stirnfläche aufweist, die wenigstens annähernd senkrecht zur Längsachse (12) des Lichtwellenleiters (8) verläuft.

3. Optische Meßanordnung nach einem der vorhergehenden Ansprüche, **dadurch gekennzeichnet,** daß ein Lichtwellenleiter (8) aus Polymethylmethacrylat PMMA vorgesehen ist.

## Claims

1. An optical measuring device for detecting cavitation bubbles (22) produced by an ultrasonic shock wave (20) in a fluid, comprising the following features:
(a) a cylindrical optical waveguide (8) having a diameter of at least 0.5 mm, and having a free end (10) and another end;
(b) the other end of the optical waveguide (8) being optically coupled to a light source (2) and an opto-receiver (4);
(c) means (5) allocated to the opto-receiver (4) for detecting a shock wave signal (30) caused by the ultrasonic shock wave (20) and for detecting a cavitation signal (32) caused by the accumulation of cavitation bubbles (22) at the free end (10), as well as for distinguishing the cavitation signal (32) from the shock wave signal (30).

2. An optical measuring device according to claim 1, characterised in that the free end (10) of the optical waveguide (8) has a flat end surface, which extends at least approximately perpendicularly to the longitudinal axis (12) of the optical waveguide (8).

3. An optical measuring device according to one of the preceding claims, characterised in that an optical waveguide (8) is composed of polymethyl methacrylate PMMA.

## Revendications

1. Dispositif de mesure optique pour la détection de bulles de cavitation (22) produites par une onde de choc ultrasonore (20) dans un liquide, présentant les caractéristiques suivantes :
a) il est prévu un guide cylindrique d'ondes lumineuses (8) d'un diamètre d'au moins 0,5 mm et ayant une extrémité libre (10) et une autre extrémité;
b) l'autre extrémité du guide d'ondes lumineuses (8) est couplée optiquement à une source de lumière (2) et à un récepteur de lumière (4);
c) au récepteur de lumière (4) sont associés des moyens (5) destinés à détecter un signal d'onde de choc (3) provoqué par l'onde de choc ultrasonore (20) et un signal de cavitation (32) provoqué par l'accumulation des bulles de cavitation (22) à l'extrémité libre (10), ainsi que destinés à distinguer le signal de cavitation (32) du signal d'onde de choc (30).

2. Dispositif de mesure optique suivant la revendication 1, caractérisé par le fait que l'extrémité libre (10) du guide d'ondes lumineuses (8) a une surface frontale plane, qui s'étend au moins approximativement perpendiculairement à l'axe longitudinal (12) du guide d'ondes lumineuses (8).

3. Dispositif de mesure optique suivant l'une des revendications précédentes, caractérisé par le fait qu'il est prévu un guide d'ondes lumineuses (8) en poly(méthacrylate de méthyle) PMMA.
